# FASCICULE DE BREVET EUROPEEN

(11) **EP 3 734 990 B1**
(45) Date de publication et mention de la délivrance du brevet: **12.10.2022**
(21) Numéro de dépôt: 20171977.0
(22) Date de dépôt: 29.04.2020
(51) Int. Cl.: H04R 1/32, H04R 1/02, B29C 39/10, B29C 39/02, B29C 39/26, B29C 33/38, B29C 33/00

(54) **PAVILLON ACOUSTIQUE, ENCEINTE ACOUSTIQUE COMPORTANT UN TEL PAVILLON ACOUSTIQUE ET PROCEDE DE FABRICATION D'UN TEL PAVILLON ACOUSTIQUE**
AKUSTISCHES HORN, LAUTSPRECHERBOX, DIE EIN SOLCHES AKUSTISCHES HORN UMFASST, UND HERSTELLUNGSVERFAHREN EINES SOLCHEN AKUSTISCHEN HORNS
ACOUSTIC HORN, ACOUSTIC ENCLOSURE COMPRISING SUCH AN ACOUSTIC HORN AND METHOD FOR MANUFACTURING SUCH AN ACOUSTIC HORN

(30) Priorité: 02.05.2019 FR 1904632
(43) Date de publication de la demande: 04.11.2020
(73) Titulaire: Lelievre, Kirwan, 51100 Reims (FR)
(72) Inventeur: Lelievre, Kirwan, 51100 Reims (FR)
(74) Mandataire: Cabinet Bleger-Rhein-Poupon

(56) Documents cités:
- WO-A1-2011/038428
- FR-A1- 2 422 492
- Anonymous: "SAM(TM) Master Studio Monitors, Genelec 1236A", , 11 mars 2017 (2017-03-11), XP055651565, Internet Extrait de l'Internet: URL:https://web.archive.org/web/2017031118 3458/http://www.genelec.com/studio-monitor s/sam-master-studio-monitors [extrait le 2019-12-10]
- Jean Hiraga: "Les haut-parleurs; 2.4 Vibrations, construction" In: "Les haut-parleurs", 2 novembre 2000 (2000-11-02), Dunod, Paris, XP055655928, ISBN: 978-2-10-005268-4 pages 291-296, * le document en entier *
- Anonymous: "6moons audio reviews: Revel Performa 3 F206", , 29 décembre 2013 (2013-12-29), XP055725415, Extrait de l'Internet: URL:https://web.archive.org/web/2013122906 2522/https://6moons.com/audioreviews/revel /1.html [extrait le 2020-08-26]

## Description

La présente invention concerne un pavillon acoustique ainsi qu'un procédé de fabrication d'un tel pavillon acoustique. L'invention concerne, aussi, une enceinte acoustique comportant un tel pavillon acoustique ainsi qu'un procédé de fabrication d'une telle enceinte acoustique.

La présente invention concerne le domaine de la fabrication des dispositifs acoustiques conçus pour restituer une source sonore, notamment un son enregistré préalablement. Cette invention concerne, alors, plus particulièrement, le domaine de la fabrication des enceintes acoustiques destinées à être raccordées à un dispositif de lecture d'une telle source sonore, notamment par l'intermédiaire d'un système d'amplification.

L'on connait, d'ores et déjà, des enceintes acoustiques qui comportent un unique haut-parleur à large bande configuré pour restituer l'ensemble du spectre sonore d'une telle source sonore. A ce propos, on observera que, pour restituer l'ensemble de ce spectre sonore avec une bonne qualité et pour garantir une cohérence sonore totale, il est nécessaire de recourir à un haut-parleur à large bande de bonne qualité qui s'avère, en fait, particulièrement onéreux.

Une alternative consiste en une enceinte acoustique qui comporte une pluralité de haut-parleurs (usuellement trois haut-parleurs) qui sont, chacun, configurés pour restituer, de manière optimale, une partie du spectre sonore de la source sonore. Les différentes parties de ce spectre sonore restituées, chacune, par l'un de ces haut-parleurs se chevauchent de sorte qu'une telle enceinte acoustique délivre un son, qui correspond à la source sonore restituée, et qui est dépourvu de toute cohérence sonore.

L'enceinte Genelec 1236A montre un pavillon acoustique pour une enceinte acoustique avec plusieurs haut-parleurs selon le préambule de la revendication 1 ("SAM(TM) Master Studio Monitors, Genelec 1236A", https://web.archive.org/web/20170311183458/http:// www.genelec.com/studio-monitors/sam-master-studio-monitors). WO 2011/038428 A1 montre une enceinte acoustique avec plusieurs haut-parleurs et un procédé de fabrication d'un pavillon acoustique pour l'enceinte. FR 2 422 492 A1 divulgue un procédé de moulage.

La présente invention se veut de remédier aux inconvénients des dispositifs acoustiques de l'état de la technique.

A cet effet, l'invention concerne un pavillon acoustique pour une enceinte acoustique avec plusieurs haut-parleurs, ce pavillon acoustique comporte une face dorsale, une face frontale et une ouverture traversante qui, d'une part, s'étend entre la face dorsale et la face frontale et, d'autre part, présente des parois latérales qui, de part et d'autre de cette ouverture traversante, s'étendent à partir de la face dorsale et en direction de la face frontale, ceci en divergeant. Ce pavillon acoustique est caractérisé par le fait que ladite ouverture traversante comporte une pluralité de lobes qui sont configurés pour être associés, chacun, à l'un des haut-parleurs de l'enceinte acoustique.

Une autre caractéristique concerne le fait que le pavillon acoustique comporte un petit lobe, un grand lobe et un lobe moyen qui se succèdent dans cet ordre au sein de l'ouverture traversante.

Encore une autre caractéristique concerne le fait que les lobes présentent, chacun, un centre tandis que, pour au moins une partie d'un tel lobe, les parois latérales, situées de part et d'autre de l'ouverture traversante, sont symétriques par rapport à une droite passant par le centre d'un tel lobe et/ou par rapport à un plan passant par les centres des lobes.

L'invention concerne, encore, une enceinte acoustique qui comporte, d'une part, un caisson qui présente un fond ainsi que des parois latérales qui s'étendent à partir de ce fond, d'autre part, une pluralité de haut-parleurs qui comportent, chacun, au moins une partie qui s'étend à l'intérieur du caisson. Cette enceinte acoustique est caractérisée par le fait qu'elle comporte un pavillon acoustique, qui présentent les caractéristiques décrites ci-dessus, et qui est positionné en sorte qu'au moins une partie de chacun des haut-parleurs s'étend entre le pavillon acoustique et le fond du caisson.

L'invention concerne, également un procédé de fabrication d'un pavillon acoustique pour une enceinte acoustique avec plusieurs haut-parleurs, ce procédé consiste en ce que :
- on fabrique un moule qui comporte, d'une part, un fond, d'autre part, des parois latérales qui s'étendent à partir de ce fond, d'autre part encore, un film élastique ou étirable, qui est tendu par-dessus l'extrémité libre des parois latérales et fixé sur ces parois latérales et, d'autre part aussi, une pluralité d'éléments, qui sont rapportés par-dessus le film et par-dessus le fond du moule, et qui sont fixés sur le fond de ce moule ;
- on introduit un matériau durcissable à l'intérieur du moule, ceci dans un volume interne délimité par le fond, les parois latérales et le film ;
- on laisse durcir ce matériau durcissable, ceci pour l'obtention du pavillon acoustique.

Selon un autre procédé de fabrication d'un pavillon acoustique pour une enceinte acoustique avec plusieurs haut-parleurs, d'une part, on réalise un coffrage qui constitue le négatif de ce pavillon acoustique, d'autre part, on introduit un matériau durcissable à l'intérieur de ce coffrage et, d'autre part encore, on laisse durcir le matériau durcissable pour obtenir le pavillon acoustique, ceci avant de décoffrer ce pavillon acoustique.

L'invention concerne, aussi, un procédé de fabrication d'une enceinte acoustique avec plusieurs haut-parleurs. Ce procédé est caractérisé par le fait que, d'une part, l'enceinte acoustique présente les caractéristiques décrites ci-dessus et, d'autre part, ce procédé de fabrication consiste en ce qu'on fabrique, tout d'abord, un pavillon acoustique conformément au procédé de fabrication décrit ci-dessus et en ce qu'on positionne, ensuite, ce pavillon acoustique en sorte qu'au moins une partie de chacun des haut-parleurs s'étende entre ce pavillon acoustique et le fond du caisson.

Ainsi, le pavillon acoustique selon l'invention comporte une ouverture traversante qui, d'une part, présente des parois latérales qui, de part et d'autre de cette ouverture traversante, s'étendent à partir de la face dorsale et en direction de la face frontale, ceci en divergeant, et, d'autre part, comporte une pluralité de lobes qui sont configurés pour être associés, chacun, à l'un des haut-parleurs de l'enceinte acoustique.

Dans une telle enceinte acoustique, chaque haut-parleur est associé à l'un des lobes de l'ouverture traversante du pavillon acoustique de sorte que chaque haut-parleur est, alors et en quelque sorte, associé à un pavillon acoustique individuel (défini par l'un des lobes de l'ouverture traversante) que comporte le pavillon acoustique ce qui permet, avantageusement, à chaque haut-parleur de bénéficier de la capacité d'amplification passive d'un tel pavillon acoustique individuel, ceci au sein du pavillon acoustique.

Ce pavillon acoustique comporte une unique ouverture traversante qui comporte une pluralité de lobes qui communiquent entre eux de sorte que les pavillons acoustiques individuels, associés chacun à l'un des haut-parleurs, communiquent alors également entre eux et sont fusionnés au sein du pavillon acoustique. Ceci permet, avantageusement, une amplification de la source sonore restituée mais également la création d'une cohérence sonore totale similaire à celle obtenue avec un haut-parleur à large bande.

D'autres buts et avantages de la présente invention apparaîtront au cours de la description qui va suivre se rapportant à des modes de réalisation qui ne sont donnés qu'à titre d'exemples indicatifs et non limitatifs.

La compréhension de cette description sera facilitée en se référant aux dessins joints en annexe et dans lesquels :

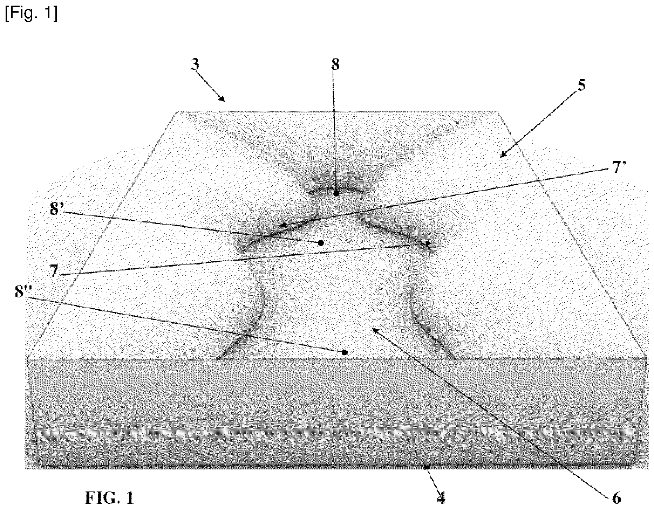

[Fig.1] représente une vue schématisée et en perspective d'un pavillon acoustique conforme à l'invention.

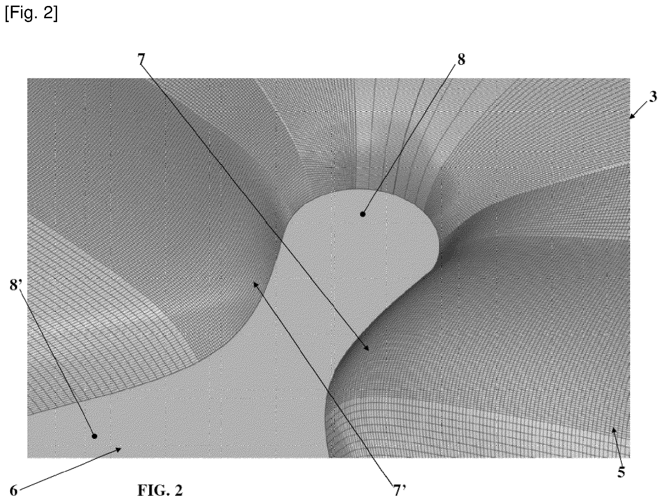

[Fig.2] représente une vue schématisée, en perspective et en détail d'un lobe que comporte l'ouverture traversante du pavillon acoustique illustré figure 1.
[Fig.3] représente une vue schématisée et en perspective d'une enceinte acoustique, qui est conforme à l'invention, et qui comporte un pavillon acoustique conforme à l'invention.
[Fig.4] représente une vue schématisée et de face d'une enceinte acoustique, qui est conforme à l'invention, et qui comporte un pavillon acoustique conforme à l'invention.

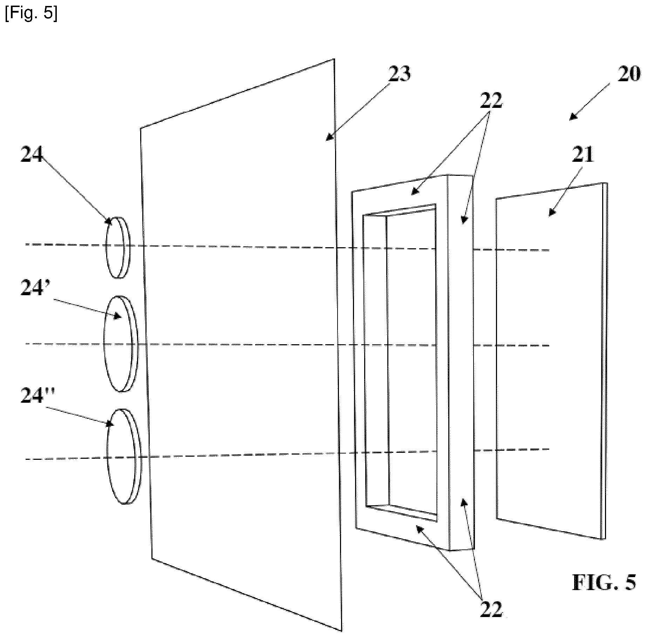

[Fig.5] représente une vue schématisée, en perspective et en éclaté d'un moule pour la mise en œuvre du procédé de fabrication d'un pavillon acoustique conforme à l'invention.

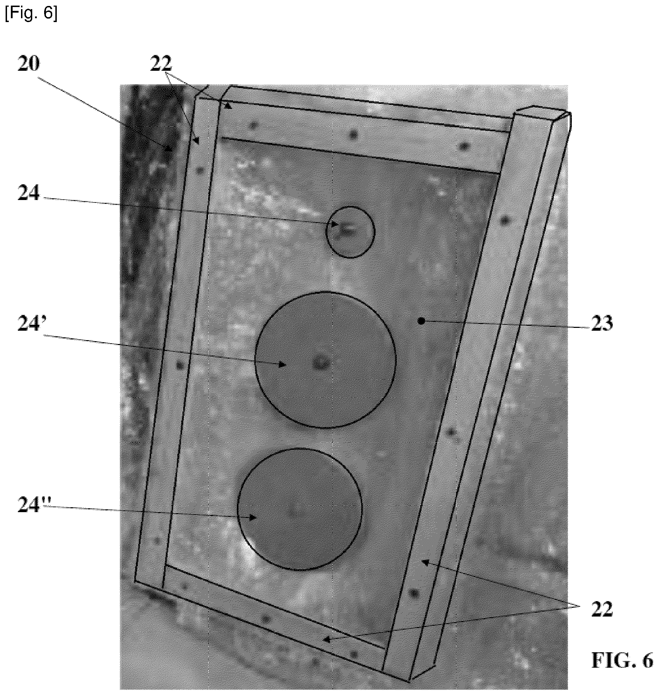

[Fig.6] représente une vue schématisée et en perspective d'un moule pour la mise en œuvre du procédé de fabrication d'un pavillon acoustique conforme à l'invention.

La présente invention concerne le domaine de la fabrication des dispositifs acoustiques conçus pour restituer une source sonore, notamment un son enregistré préalablement. Cette invention concerne, plus particulièrement, le domaine de la fabrication des enceintes acoustiques, plus particulièrement le domaine de la fabrication des pavillons acoustiques que comporte une telle enceinte acoustique.

Une telle enceinte acoustique 1 est destinée à être raccordée à un dispositif de lecture d'une source sonore (notamment constituée par un morceau de musique ou analogue), notamment par l'intermédiaire d'un système d'amplification.

Une telle enceinte acoustique 1 comporte une pluralité de haut-parleurs (2 ; 2' ; 2"), plus particulièrement des haut-parleurs (2 ; 2' ; 2") configurés, chacun, pour restituer une partie (notamment une partie différente) du spectre sonore de la source sonore.

A ce propos, on observera que cette enceinte acoustique 1 peut, alors, comporter des haut-parleurs (2 ; 2' ; 2") qui sont configurés en sorte qu'au moins un des haut-parleurs 2" restitue une partie du spectre sonore de cette source sonore qui chevauche au moins une autre partie de ce spectre sonore que restitue au moins un autre de ces haut-parleurs (2 ; 2').

Ces haut-parleurs (2 ; 2' ; 2") peuvent présenter des dimensions différentes, plus particulièrement des diamètres différents qui correspondent à des tailles de membranes différentes. En fait, ladite enceinte acoustique 1 peut, alors, comporter un petit haut-parleur 2 (notamment connu sous la dénomination anglaise de « tweeter » et destiné à reproduire les fréquences sonores élevées), un grand haut-parleur 2' (notamment connu sous la dénomination anglaise de « boomer » et destiné à reproduire les fréquences sonores basses) et un haut-parleur moyen 2" (notamment connu sous la dénomination anglaise de « médium » et destiné à reproduire les fréquences sonores intermédiaires).

Une telle enceinte acoustique 1 comporte, également, un pavillon acoustique 3.

Selon l'invention, ce pavillon acoustique 3 comporte une face dorsale 4, une face frontale 5 et une ouverture traversante 6, plus particulièrement une unique ouverture traversante 6.

Cette ouverture traversante 6 s'étend entre la face dorsale 4 et la face frontale 5 du pavillon acoustique 3. Cette ouverture traversante 6 présente des parois latérales (7 ; 7') qui, de part et d'autre de cette ouverture traversante 6, s'étendent à partir de la face dorsale 4 et en direction de la face frontale 5, ceci en divergeant.

Encore une autre caractéristique concerne le fait que cette ouverture traversante 6 comporte une pluralité de lobes (8 ; 8' ; 8") qui sont configurés pour être associés, chacun, à l'un des haut-parleurs (2 ; 2' ; 2") de l'enceinte acoustique 1.

Tels que visibles sur les figures en annexe, ces lobes (8 ; 8' ; 8") communiquent (notamment deux par deux) au sein de l'ouverture traversante 6.

En fait, ces lobes (8 ; 8' ; 8") peuvent présenter des dimensions différentes, notamment des diamètres différents. Tel que visible sur les figures en annexe, le pavillon acoustique 3 comporte, alors, un petit lobe 8 (qui est, de préférence, associé au petit haut-parleur 2), un grand lobe 8' (qui est, de préférence, associé au grand haut-parleur 2') et un lobe moyen 8" (qui est, de préférence, associé au haut-parleur moyen 2"). Selon un mode préféré de réalisation, ces lobes (petit lobe 8, grand lobe 8', lobe moyen 8") sont agencés au sein de l'ouverture traversante 6, ceci en sorte qu'ils se succèdent dans cet ordre au sein de l'ouverture traversante 6. Un tel agencement permet d'améliorer l'ergonomie du pavillon acoustique 3 et, par conséquent également, l'ergonomie de l'enceinte acoustique 1.

En ce qui concerne les dimensions de ces lobes (8 ; 8' ; 8"), on observera que, pour au moins une partie de chaque lobe (8 ; 8' ; 8"), l'ouverture traversante 6 présente, au niveau de la face dorsale 4 du pavillon acoustique 3, une largeur inférieure ou égale, soit à l'emprise du haut-parleur (2 ; 2' ; 2") associé à un tel lobe (8 ; 8' ; 8"), soit (et de préférence) au diamètre d'une membrane du haut-parleur (2 ; 2' ; 2") associé à un tel lobe (8 ; 8' ; 8").

On observera que ces lobes (8 ; 8' ; 8") présentent, chacun, un centre.

Aussi et selon une autre caractéristique, les centres de ces lobes (8 ; 8' ; 8") peuvent occuper les sommets d'un polygone ou peuvent être agencés sur une courbe.

De manière alternative et selon un mode de réalisation préféré de l'invention, les centres de ces lobes (8 ; 8' ; 8") sont agencés sur une droite de sorte que ces lobes (8 ; 8' ; 8") sont, alors, alignés.

Quoi qu'il en soit et tel qu'évoqué ci-dessus, les lobes (8 ; 8' ; 8") peuvent être agencés de différentes manières, ceci au sein de l'ouverture traversante 6. Là encore et tel que mentionné ci-dessus, la manière dont ces lobes (8 ; 8' ; 8") sont agencés (notamment tel que décrit ci-dessus) permet d'améliorer notablement l'ergonomie du pavillon acoustique 3 et, par conséquent également, l'ergonomie de l'enceinte acoustique 1.

Selon une autre caractéristique, pour au moins une partie d'un tel lobe (8 ; 8' ; 8"), les parois latérales (7 ; 7'), situées de part et d'autre de l'ouverture traversante 6, sont symétriques par rapport à une droite passant par le centre d'un tel lobe (8 ; 8' ; 8").

De manière alternative ou (et de préférence) additionnelle, pour au moins une partie d'un tel lobe (8 ; 8' ; 8") (voire pour l'intégralité de l'ouverture traversante 6) les parois latérales (7 ; 7'), situées de part et d'autre de l'ouverture traversante 6, sont symétriques par rapport à un plan passant par les centres des lobes (8 ; 8' ; 8").

Encore une autre caractéristique concerne le fait que les parois latérales (7 ; 7') présentent une courbure.

Selon un premier mode de réalisation, une telle courbure est, au moins en partie, définie par une fonction parabolique.

Cependant et selon un autre mode de réalisation, une telle courbure, d'une part, tend vers une asymptote constituée par la face frontale 5 ou parallèle à la face dorsale 4 du pavillon acoustique 3, et, d'autre part, est définie par une fonction asymptotique.

Une telle fonction asymptotique peut être du type :
« f(x)=a - b/x » ou « f(x) = c - exp(-dx) » dans lesquelles a, b, c et d peuvent être des nombres entiers naturels.

Encore une autre caractéristique concerne le fait que le pavillon acoustique 3 peut être constitué par un matériau durcissable, notamment du béton, du plâtre ou analogue.

Quoi qu'il en soit, le pavillon acoustique 3 conforme à l'invention est constitué par une pièce unique et est, alors, de type monobloc. Ce pavillon acoustique 3 adopte, alors, la forme d'un monopavillon.

L'invention concerne, également, une enceinte acoustique 1.

Cette enceinte acoustique 1 comporte au moins, d'une part, un pavillon acoustique 3 qui présente les caractéristiques décrites ci-dessus et, d'autre part, une pluralité de haut-parleurs (2 ; 2' ; 2") qui présentent les caractéristiques décrites ci-dessus.

Selon un premier mode de réalisation (non illustré), dans une telle enceinte acoustique 1, les haut-parleurs (2 ; 2' ; 2") comportent, chacun, au moins une partie qui s'étend à l'intérieur de l'ouverture traversante 6 ainsi qu'à l'intérieur de l'un des lobes (8 ; 8' ; 8") de l'ouverture traversante 6 du pavillon acoustique 3.

Dans un tel mode de réalisation, ces haut-parleurs (2 ; 2' ; 2") peuvent, alors, être, chacun, au moins en partie, incrustés à l'intérieur de ladite ouverture traversante 6, plus particulièrement incrustés, chacun, au moins en partie à l'intérieur de l'un des lobes (8 ; 8' ; 8") de l'ouverture traversante 6 du pavillon acoustique 3.

Dans ce premier mode de réalisation, ladite enceinte acoustique 1 peut, alors, comporter, uniquement, ledit pavillon acoustique 3 et lesdits haut-parleurs (2 ; 2' ; 2"). Ces haut-parleurs (2 ; 2' ; 2") peuvent, alors, être fixés sur le pavillon acoustique 3. Cependant et de manière alternative l'enceinte acoustique 1 peut être complétée par un support sur lequel sont fixés ce pavillon acoustique 3 et ces haut-parleurs (2 ; 2' ; 2").

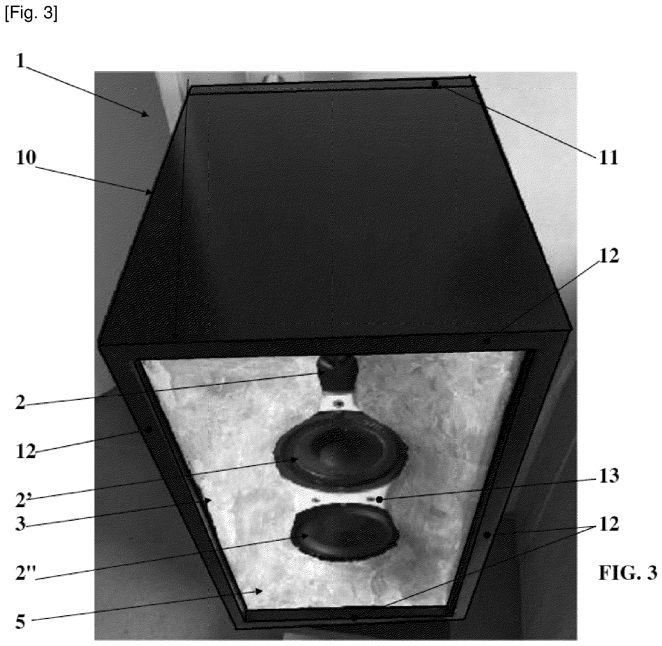

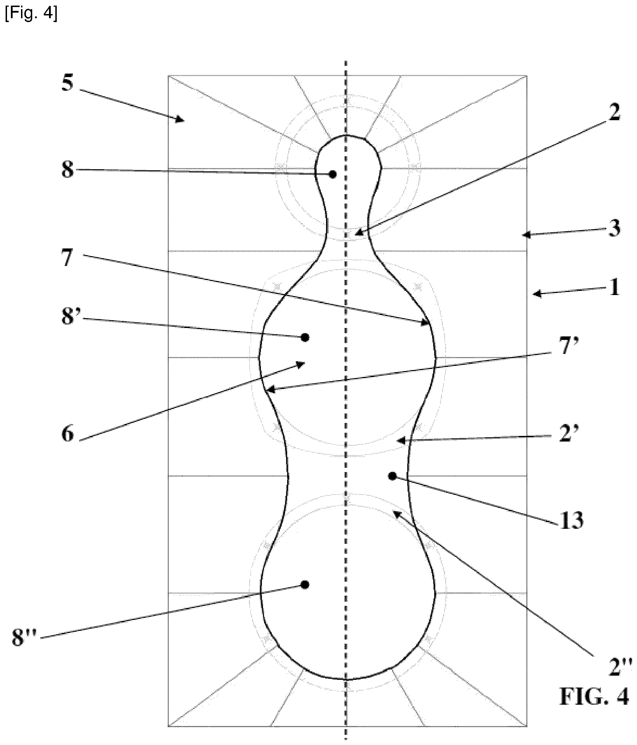

Selon un autre mode de réalisation (illustré figures 3 et 4), ladite enceinte acoustique 1 comporte un caisson 10 qui présente un fond 11 ainsi que des parois latérales 12 qui s'étendent à partir de ce fond 11.

Dans cette enceinte acoustique 1, les haut-parleurs (2 ; 2' ; 2") comportent, chacun, au moins une partie qui s'étend à l'intérieur du caisson 10.

De plus, dans cette enceinte acoustique 1, le pavillon acoustique 3 est positionné en sorte qu'au moins une partie de chacun des haut-parleurs (voire l'intégralité de chacun de ces haut-parleurs 2 ; 2' ; 2") s'étend entre le pavillon acoustique 3 et le fond 11 du caisson 10.

A ce propos, on observera que c'est au moins la membrane mobile et/ou la structure et/ou collier de fixation d'un tel haut-parleur (2 ; 2' ; 2"), voire (et de préférence) l'intégralité d'un tel haut-parleur (2 ; 2' ; 2") qui s'étend, alors, à l'intérieur du caisson 10 ainsi qu'entre le pavillon acoustique 3 et le fond 11 du caisson 10.

Un premier mode de réalisation (non illustré) consiste en ce que l'enceinte acoustique 1 comporte ledit caisson 10 ainsi que ledit pavillon acoustique 3 qui est, alors, intégré à ce caisson 10, notamment intégré à l'intérieur de ce caisson 10.

Selon une autre caractéristique, ladite enceinte acoustique 1 comporte, encore, au moins un support 13 qui peut être logé à l'intérieur du caisson 10 ou qui peut équiper ce caisson 10, notamment extérieurement.

En fait, un tel support 13 peut être rapporté sur ce caisson 10, notamment sur les parois latérales 12 de ce caisson 10, ceci extérieurement ou (et de préférence) intérieurement à ce caisson 10.

C'est, plus particulièrement, sur un tel support 13 que sont fixés (notamment rapportés) les haut-parleurs (2 ; 2' ; 2") et/ou le pavillon acoustique 3.

Une autre caractéristique concerne le fait que ce support 13 comporte une pluralité d'ouvertures traversantes tandis que les haut-parleurs (2 ; 2' ; 2") s'étendent, chacun, soit en regard, soit (et de préférence, au moins en partie) au travers de l'une de ces ouvertures traversantes.

Tel que visible sur la figure 3, un tel support 13 peut adopter la forme d'une plaque, qui est rapportée sur les parois latérales 12 du caisson 10 (notamment intérieurement au caisson 10), qui comporte une pluralité d'ouvertures telles que mentionnées ci-dessus (notamment traversées, chacune, par l'un des haut-parleurs 2, 2', 2") et sur laquelle sont fixés (notamment rapportés, plus particulièrement sur la face de la plaque orientée vers l'extérieur du caisson 10) les haut-parleurs (2 ; 2' ; 2") et le pavillon acoustique 3.

Quoi qu'il en soit, ces haut-parleurs (2 ; 2' ; 2") sont positionnés au moins en regard de l'ouverture traversante 6 du pavillon acoustique 3.

En fait, chacun de ces haut-parleurs (2 ; 2' ; 2") est positionné au moins en regard de l'un des lobes (8 ; 8' ; 8") de l'ouverture traversante 6 du pavillon acoustique 3. Plus particulièrement, chacun de ces haut-parleurs (2 ; 2' ; 2") s'étend selon un axe qui, de préférence, passe par le centre de l'un de ces lobes (8 ; 8' ; 8").

Quel que soit le mode de réalisation, au moins une partie (voire, et de préférence, l'intégralité) du pavillon acoustique 3 s'étend, alors, à l'avant des haut-parleurs (2 ; 2' ; 2").

L'invention concerne, également, un procédé de fabrication d'un pavillon acoustique 3 pour une enceinte acoustique 1 avec plusieurs haut-parleurs (2 ; 2' ; 2"). Ce pavillon acoustique 3 et/ou cette enceinte acoustique 1 présentent les caractéristiques décrites ci-dessus.

Selon un premier mode de réalisation, ce procédé de fabrication consiste en ce qu'on imprime ce pavillon acoustique 3 (notamment à l'aide d'une imprimante 3D et/ou à partir de données numériques) ou en ce qu'on usine (notamment avec une fraiseuse, de préférence à commande numérique et/ou à partir de données numériques) ce pavillon acoustique 3 (plus particulièrement au moins l'ouverture traversante 6 de ce pavillon acoustique 3) dans un bloc de matière, notamment du bois ou une matière synthétique.

Cependant et selon un deuxième mode de réalisation, ce procédé de fabrication consiste en ce que :
- on fabrique un moule 20 qui comporte, d'une part, un fond 21, d'autre part, des parois latérales 22 qui s'étendent à partir de ce fond 21, d'autre part encore, un film 23 élastique ou étirable, qui est tendu par-dessus l'extrémité libre des parois latérales 22 et fixé sur ces parois latérales 22 (plus particulièrement sur ces extrémités libres) et, d'autre part aussi, une pluralité d'éléments (24 ; 24' ; 24"), qui sont rapportés par-dessus le film 23 (élastique ou étirable) et par-dessus le fond 21 du moule 20, et qui sont fixés (notamment de manière réversible) sur le fond 21 de ce moule 20 ;
- on introduit un matériau durcissable à l'intérieur du moule 20, ceci dans un volume interne délimité par le fond 21, les parois latérales 22 et le film 23 ;
- on laisse durcir ce matériau durcissable, ceci pour l'obtention du pavillon acoustique 3.

En ce qui concerne ledit moule 20, on observera que la hauteur des parois latérales 22 de ce moule 20 correspond à la distance entre la face dorsale 4 et la face frontale 5 du pavillon acoustique 3.

De plus et en ce qui concerne les éléments (24 ; 24' ; 24"), ceux-ci présentent, chacun, des dimensions (plus particulièrement des diamètres) qui correspondent à celles d'au moins une partie (plus particulièrement de l'emprise ou, et de préférence, de la membrane mobile) de l'un des haut-parleurs (2 ; 2' ; 2") de l'enceinte acoustique 1.

Selon un mode de réalisation particulier, ces éléments (24 ; 24' ; 24") adoptent, chacun, la forme d'un disque et présentent, chacun, un diamètre qui correspond au diamètre de la membrane mobile ou de l'emprise de l'un des haut-parleurs (2 ; 2' ; 2") de l'enceinte acoustique 1.

En fait, chaque élément (24 ; 24' ; 24") est configuré pour définir, par moulage, l'un des lobes (8 ; 8' ; 8"), que comporte le pavillon acoustique 3, et qui correspond à l'un des haut-parleurs (2 ; 2' ; 2") de l'enceinte acoustique 1.

En ce qui concerne le procédé de fabrication, on observera que, lorsqu'on introduit le matériau durcissable à l'intérieur du moule 20, on coule ou on injecte ce matériau durcissable à l'intérieur de ce moule 20.

De plus, ce procédé de fabrication consiste, encore, en ce que, après avoir introduit (coulé/injecté) le matériau durcissable à l'intérieur du moule 20 et avant durcissement de ce matériau durcissable, on positionne le moule 20 en sorte que, d'une part, les éléments (24 ; 24' ; 24") soient en direction du sol et, d'autre part, le fond 21 soit orienté dans une direction opposée au sol.

En outre, ce procédé de fabrication consiste en ce que, avant de rapporter les éléments (24 ; 24' ; 24") par-dessus le film 23 et le fond 21 du moule 20, on fabrique ces éléments (24 ; 24' ; 24") en sorte qu'ils présentent, chacun, les caractéristiques mentionnées ci-dessus, en particulier, des dimensions qui correspondent à celles d'au moins une partie de l'un des haut-parleurs (2 ; 2' ; 2") de l'enceinte acoustique 1.

Finalement, après durcissement du matériau durcissable, on démoule le pavillon acoustique 3.

Selon un autre type de réalisation, le procédé de fabrication d'un pavillon acoustique 3 (qui présente les caractéristiques décrites ci-dessus) pour une enceinte acoustique 1 (qui présente, là aussi, les caractéristiques décrites ci-dessus) avec plusieurs haut-parleurs (2 ; 2' ; 2") consiste en ce que, d'une part, on réalise un coffrage qui constitue le négatif de ce pavillon acoustique 3, d'autre part, on introduit un matériau durcissable à l'intérieur de ce coffrage et, d'autre part encore, on laisse durcir le matériau durcissable pour obtenir le pavillon acoustique 3, ceci avant de décoffrer ce pavillon acoustique.

A ce propos, on observera que, selon un premier mode de réalisation de ce type de réalisation, lorsqu'on réalise le coffrage, on usine un bloc de matière (notamment du bois ou une matière synthétique et/ou à l'aide d'une fraise à commande numérique) ou on imprime un tel coffrage (notamment à l'aide d'une imprimante 3D).

Cependant et selon un deuxième mode de réalisation de ce type de réalisation, lorsqu'on réalise le coffrage, on réalise, tout d'abord, un pavillon acoustique de référence en mettant en œuvre le procédé de fabrication décrit ci-dessus (usinage, impression, ou moulage dans un moule 20), on réalise, ensuite, une empreinte du pavillon acoustique de référence dans un matériau adapté (notamment du plâtre ou analogue) et, finalement, on réalise le coffrage à partir de cette empreinte.

A ce propos, on observera que ce coffrage peut, avantageusement, être au moins en partie constitué par cette empreinte.

L'invention concerne, également, un procédé de fabrication d'une enceinte acoustique 1 (qui présente les caractéristiques décrites ci-dessus) avec plusieurs haut-parleurs (2 ; 2' ; 2").

Ce procédé de fabrication consiste en ce qu'on fabrique, tout d'abord, un pavillon acoustique 3 conformément au procédé de fabrication décrit ci-dessus et en ce qu'on positionne, ensuite, ce pavillon acoustique 3 en sorte qu'au moins une partie de chacun des haut-parleurs (2 ; 2' ; 2") s'étende entre ce pavillon acoustique 3 et le fond 21 du caisson 20 de l'enceinte acoustique 1.

En fait, on positionne le pavillon acoustique 3 en sorte qu'au moins la membrane mobile de chacun de ces haut-parleurs (2 ; 2' ; 2"), voire (et de préférence) l'intégralité de chacun de ces haut-parleurs (2 ; 2' ; 2") s'étende entre ce pavillon acoustique 3 et le fond 21 du caisson 20.

De manière alternative ou (et de préférence) additionnelle, ce procédé de fabrication consiste en ce que, après avoir fabriqué le pavillon acoustique 3 selon le procédé de fabrication décrit ci-dessus, on positionne, ensuite, le pavillon acoustique 3 par rapport aux haut-parleurs (2 ; 2' ; 2") en sorte que, soit ces haut-parleurs (2 ; 2' ; 2") comportent, chacun, au moins une partie (notamment une partie de la membrane mobile) qui s'étend à l'intérieur de l'un des lobes (8 ; 8' ; 8 ") de l'ouverture traversante 6 du pavillon acoustique 3, soit (et de préférence) ces haut-parleurs (2 ; 2' ; 2") sont positionnés, chacun, en regard d'un tel lobe (8 ; 8' ; 8").

## Revendications

1. Pavillon acoustique (3) pour une enceinte acoustique (1) avec plusieurs haut-parleurs (2; 2'; 2") , ce pavillon acoustique (3) comporte une face dorsale (4), une face frontale (5) et une ouverture traversante (6) qui, d'une part, s'étend entre la face dorsale (4) et la face frontale (5) et, d'autre part, présente des parois latérales (7 ; 7') qui, de part et d'autre de cette ouverture traversante (6), s'étendent à partir de la face dorsale (4) et en direction de la face frontale (5), ceci en divergeant, **caractérisé par le fait que** ladite ouverture traversante (6) comporte une pluralité de lobes (8 ; 8' ; 8") qui sont configurés pour être associés, chacun, à l'un des haut-parleurs (2 ; 2' ; 2") de l'enceinte acoustique (1).

2. Pavillon acoustique (3) selon la revendication 1, **caractérisé par le fait que** les lobes (8 ; 8' ; 8") présentent, chacun, un centre tandis que les centres de ces lobes (8 ; 8' ; 8") sont agencés sur une droite.

3. Pavillon acoustique (3) selon l'une quelconque des revendications 1 ou 2, **caractérisé par le fait qu'**il comporte un petit lobe (8), un grand lobe (8') et un lobe moyen (8") qui se succèdent dans cet ordre au sein de l'ouverture traversante (6).

4. Pavillon acoustique (3) selon l'une quelconque des revendications précédentes, **caractérisé par le fait que** les lobes (8 ; 8' ; 8") présentent, chacun, un centre tandis que, pour au moins une partie d'un tel lobe (8 ; 8' ; 8"), les parois latérales (7 ; 7'), situées de part et d'autre de l'ouverture traversante (6), sont symétriques par rapport à une droite passant par le centre d'un tel lobe (8 ; 8' ; 8") et/ou par rapport à un plan passant par les centres des lobes (8 ; 8' ; 8").

5. Pavillon acoustique (3) selon l'une quelconque des revendications précédentes, **caractérisé par le fait que** les parois latérales (7 ; 7') présentent une courbure, soit qui est, au moins en partie, définie par une fonction parabolique, soit qui est définie par une fonction asymptotique et qui tend vers une asymptote, soit constituée par la face frontale (5), soit parallèle à la face dorsale (4).

6. Pavillon acoustique (3) selon l'une quelconque des revendications précédentes, **caractérisé par le fait qu'**il est constitué par un matériau durcissable, notamment du béton, du plâtre ou analogue.

7. Enceinte acoustique (1) qui comporte, d'une part, un pavillon acoustique (3) conforme à l'une quelconque des revendications précédentes, d'autre part, une pluralité de haut-parleurs (2 ; 2' ; 2") qui comportent, chacun, au moins une partie qui s'étend à l'intérieur de l'ouverture traversante (6) ainsi qu'à l'intérieur de l'un des lobes (8 ; 8' ; 8") de l'ouverture traversante (6) du pavillon acoustique (3).

8. Enceinte acoustique (1) qui comporte, d'une part, un caisson (10) qui présente un fond (11) ainsi que des parois latérales (12) qui s'étendent à partir de ce fond (11), d'autre part, une pluralité de haut-parleurs (2 ; 2' ; 2") qui comportent, chacun, au moins une partie qui s'étend à l'intérieur du caisson (20), **caractérisée par le fait qu'**elle comporte un pavillon acoustique (3), qui est conforme à l'une quelconque des revendications 1 à 6, et qui est positionné en sorte qu'au moins une partie de chacun des haut-parleurs (2 ; 2' "; 2) s'étend entre le pavillon acoustique (3) et le fond (11) du caisson (10).

9. Procédé de fabrication d'un pavillon acoustique (3) pour une enceinte acoustique (1) avec plusieurs haut-parleurs (2 ; 2' ; 2"), **caractérisé par le fait que** le pavillon acoustique (3) est conforme à l'une quelconque des revendications 1 à 6 et que ce procédé consiste en ce que :
- on fabrique un moule (20) qui comporte, d'une part, un fond (21), d'autre part, des parois latérales (22) qui s'étendent à partir de ce fond (21), d'autre part encore, un film (23) élastique ou étirable, qui est tendu par-dessus l'extrémité libre des parois latérales (22) et fixé sur ces parois latérales (22) et, d'autre part aussi, une pluralité d'éléments (24 ; 24' ; 24"), qui sont rapportés par-dessus le film (23) et par-dessus le fond (21) du moule (20), et qui sont fixés sur le fond (21) de ce moule (20) ;
- on introduit un matériau durcissable à l'intérieur du moule (20), ceci dans un volume interne délimité par le fond (21), les parois latérales (22) et le film (23) ;
- on laisse durcir ce matériau durcissable, ceci pour l'obtention du pavillon acoustique (3).

10. Procédé de fabrication d'un pavillon acoustique (3) pour une enceinte acoustique (1) avec plusieurs haut-parleurs (2 ; 2' ; 2"), **caractérisé par le fait que**, d'une part, le pavillon acoustique (3) est conforme à l'une quelconque des revendications 1 à 6 et, d'autre part, on imprime ce pavillon acoustique (3) ou on usine ce pavillon acoustique (3) dans un bloc de matière, notamment du bois ou une matière synthétique.

11. Procédé de fabrication d'un pavillon acoustique (3) pour une enceinte acoustique (1) avec plusieurs haut-parleurs (2 ; 2' ; 2"), **caractérisé par le fait que** le pavillon acoustique (3) est conforme à l'une quelconque des revendications 1 à 6 et que le procédé de fabrication consiste en ce que, d'une part, on réalise un coffrage qui constitue le négatif de ce pavillon acoustique (3), d'autre part, on introduit un matériau durcissable à l'intérieur de ce coffrage et, d'autre part encore, on laisse durcir le matériau durcissable pour obtenir le pavillon acoustique (3), ceci avant de décoffrer ce pavillon acoustique (3).

12. Procédé de fabrication d'un pavillon acoustique (3) selon la revendication 11, **caractérisé par le fait que**, lorsqu'on réalise le coffrage, on imprime un tel coffrage ou on usine un bloc de matière.

13. Procédé de fabrication d'un pavillon acoustique (3) selon la revendication 11, **caractérisé par le fait que** lorsqu'on réalise le coffrage, on réalise, tout d'abord, un pavillon acoustique de référence en mettant en œuvre le procédé de fabrication selon l'une quelconque des revendications 9 ou 10, on réalise, ensuite, une empreinte du pavillon acoustique de référence dans un matériau adapté et, finalement, on réalise le coffrage à partir de cette empreinte.

14. Procédé de fabrication d'une enceinte acoustique (1) avec plusieurs haut-parleurs (2 ; 2' ; 2"), **caractérisé par le fait que**, d'une part, l'enceinte acoustique (1) est conforme à la revendication 8 et, d'autre part, ce procédé de fabrication consiste en ce qu'on fabrique, tout d'abord, un pavillon acoustique (3) conformément au procédé de fabrication selon l'une quelconque des revendications 9 à 13 et en ce qu'on positionne, ensuite, ce pavillon acoustique (3) en sorte qu'au moins une partie de chacun des haut-parleurs (2 ; 2' ; 2") s'étende entre ce pavillon acoustique (3) et le fond (11) du caisson (10).

## Patentansprüche

1. Schalltrichter (3) für eine Lautsprecherbox (1) mit mehreren Lautsprechern (2; 2'; 2"), wobei dieser Schalltrichter (3) eine Rückenfläche (4), eine Vorderfläche (5) und eine Durchgangsöffnung (6) aufweist, die sich einerseits zwischen der Rückenfläche (4) und der Vorderfläche (5) erstreckt und andererseits Seitenwände (7; 7') vorweist, die sich auf beiden Seiten dieser Durchgangsöffnung (6) von der Rückenfläche (4) und in Richtung der Vorderfläche (5) erstrecken, dies divergierend, **dadurch gekennzeichnet, dass** die Durchgangsöffnung (6) eine Vielzahl von Keulen (8; 8'; 8") aufweist, die konfiguriert sind, um jeweils einem der Lautsprecher (2; 2'; 2") der Lautsprecherbox (1) zugeordnet zu sein.

2. Schalltrichter (3) nach Anspruch 1, **dadurch gekennzeichnet, dass** die Keulen (8; 8'; 8") jeweils eine Mitte vorweisen, während die Mitten dieser Keulen (8; 8'; 8") auf einer Geraden angeordnet sind.

3. Schalltrichter (3) nach einem der Ansprüche 1 oder 2, **dadurch gekennzeichnet, dass** er eine kleine Keule (8), eine große Keule (8') und eine mittelgroße Keule (8") aufweist, die in dieser Reihenfolge innerhalb der Durchgangsöffnung (6) aufeinander folgen.

4. Schalltrichter (3) nach einem der vorstehenden Ansprüche, **dadurch gekennzeichnet, dass** die Keulen (8; 8'; 8") jeweils eine Mitte vorweisen, während mindestens für einen Teil einer solchen Keule (8; 8'; 8") die Seitenwände (7; 7'), die sich auf beiden Seiten der Durchgangsöffnung (6) befinden, bezogen auf eine Gerade, die durch die Mitte einer solchen Keule (8; 8'; 8") verläuft, und/oder bezogen auf eine Ebene symmetrisch sind, die durch die Mitten der Keulen (8; 8'; 8") verläuft.

5. Schalltrichter (3) nach einem der vorstehenden Ansprüche, **dadurch gekennzeichnet, dass** die Seitenwände (7; 7') eine Krümmung vorweisen, die entweder mindestens teilweise durch eine Parabelfunktion definiert ist, oder die durch eine asymptotische Funktion definiert ist und die zu einer Asymptote tendiert, oder aus der Vorderfläche (5) besteht oder parallel zu der Rückenfläche (4) ist.

6. Schalltrichter (3) nach einem der vorstehenden Ansprüche, **dadurch gekennzeichnet, dass** er aus einem härtbaren Material besteht, insbesondere Beton, Gips oder dergleichen.

7. Lautsprecherbox (1), die einerseits einen Schalltrichter (3), der einem der vorstehenden Ansprüche entspricht, andererseits eine Vielzahl von Lautsprechern (2; 2'; 2") aufweist, die jeweils mindestens einen Teil aufweisen, der sich im Inneren der Durchgangsöffnung (6) sowie im Inneren einer der Keulen (8; 8'; 8") der Durchgangsöffnung (6) des Schalltrichters (3) erstreckt.

8. Lautsprecherbox (1), die einerseits einen Kasten (10), der einen Boden (11) sowie Seitenwände (12) vorweist, die sich von diesem Boden (11) erstrecken, andererseits eine Vielzahl von Lautsprechern (2; 2'; 2") aufweist, die jeweils mindestens einen Teil aufweisen, der sich im Inneren des Kastens (20) erstreckt, **dadurch gekennzeichnet, dass** sie einen Schalltrichter (3) aufweist, der einem der Ansprüche 1 bis 6 entspricht und der so positioniert ist, dass sich mindestens ein Teil jedes der Lautsprecher (2; 2' "; 2) zwischen dem Schalltrichter (3) und dem Boden (11) des Kastens (10) erstreckt.

9. Verfahren zum Fertigen eines Schalltrichters (3) für eine Lautsprecherbox (1) mit mehreren Lautsprechern (2; 2'; 2"), **dadurch gekennzeichnet, dass** der Schalltrichter (3) einem der Ansprüche 1 bis 6 entspricht und dass dieses Verfahren besteht aus:
- Fertigen einer Form (20), die einerseits einen Boden (21), andererseits Seitenwände (22), die sich von diesem Boden (21) erstrecken, andererseits außerdem eine elastische oder streckbare Folie (23), die über das freie Ende der Seitenwände (22) gespannt und an diesen Seitenwänden (22) befestigt ist, und andererseits auch eine Vielzahl von Elementen (24; 24'; 24") aufweist, die über der Folie (23) und über dem Boden (21) der Form (20) angebracht sind und die an dem Boden (21) dieser Form (20) befestigt sind;
- Einführen eines härtbaren Materials in das Innere der Form (20), dies in ein Innenvolumen, das durch den Boden (21), die Seitenwände (22) und die Folie (23) begrenzt ist;
- Härtenlassen dieses härtbaren Materials, dies, um den Schalltrichter (3) zu erhalten.

10. Verfahren zum Fertigen eines Schalltrichters (3) für eine Lautsprecherbox (1) mit mehreren Lautsprechern (2; 2'; 2"), **dadurch gekennzeichnet, dass** der Schalltrichter (3) einerseits einem der Ansprüche 1 bis 6 entspricht und andererseits dieser Schalltrichter (3) gedruckt oder dieser Schalltrichter (3) in einen Materialblock eingearbeitet wird, insbesondere aus Holz oder Kunststoff.

11. Verfahren zum Fertigen eines Schalltrichters (3) für eine Lautsprecherbox (1) mit mehreren Lautsprechern (2; 2'; 2"), **dadurch gekennzeichnet, dass** der Schalltrichter (3) einem der Ansprüche 1 bis 6 entspricht und dass das Fertigungsverfahren daraus besteht, dass einerseits eine Schalung hergestellt wird, die das Negativ dieses Schalltrichters (3) ausbildet, andererseits im Inneren dieser Schalung ein härtbares Material eingeführt wird und andererseits außerdem das härtbare Material härten gelassen wird, um den Schalltrichter (3) zu erhalten, bevor dieser Schalltrichter (3) ausgeschalt wird.

12. Verfahren zum Fertigen eines Schalltrichters (3) nach Anspruch 11, **dadurch gekennzeichnet, dass,** wenn die Schalung hergestellt wird, eine solche Schalung gedruckt oder ein Materialblock bearbeitet wird.

13. Verfahren zum Fertigen eines Schalltrichters (3) nach Anspruch 11, **dadurch gekennzeichnet, dass,** wenn die Schalung hergestellt wird, zunächst ein Referenzschalltrichter hergestellt wird, indem das Fertigungsverfahren nach einem der Ansprüche 9 oder 10 ausgeführt wird, anschließend ein Abdruck des Referenzschalltrichters in einem geeigneten Material hergestellt wird, schließlich aus diesem Abdruck die Schalung hergestellt wird.

14. Verfahren zum Fertigen einer Lautsprecherbox (1) mit mehreren Lautsprechern (2; 2'; 2"), **dadurch gekennzeichnet, dass** einerseits die Lautsprecherbox (1) Anspruch 8 entspricht und andererseits dieses Fertigungsverfahren daraus besteht, dass zunächst ein Schalltrichter (3) entsprechend dem Fertigungsverfahren nach einem der Ansprüche 9 bis 13 gefertigt wird, und dass dieser Schalltrichter (3) anschließend so positioniert wird, dass sich mindestens ein Teil jedes der Lautsprecher (2; 2'; 2") zwischen diesem Schalltrichter (3) und dem Boden (11) des Kastens (10) erstreckt.

## Claims

1. Acoustic horn (3) for an acoustic enclosure (1) having a plurality of loudspeakers (2; 2'; 2"), this acoustic horn (3) comprises a rear face (4), a front face (5) and a through opening (6) which extends between the rear face (4) and the front face (5) and has lateral walls (7; 7') which, on either side of this through opening (6), extend from the rear face (4) and in the direction of the front face (5) in a diverging manner, **characterized in that** said through opening (6) comprises a plurality of lobes (8; 8'; 8") which are configured to each be associated with one of the loudspeakers (2; 2'; 2") of the acoustic enclosure (1).

2. Acoustic horn (3) according to claim 1, **characterized in that** the lobes (8; 8'; 8") each have a center while the centers of these lobes (8; 8'; 8") are arranged on a straight line.

3. Acoustic horn (3) according to either claim 1 or claim 2, **characterized in that** it comprises a small lobe (8), a large lobe (8') and a medium lobe (8") which follow one another in this order within the through opening (6).

4. Acoustic horn (3) according to any of the preceding claims, **characterized in that** the lobes (8; 8'; 8") each have a center while, for at least part of such a lobe (8; 8'; 8"), the lateral walls (7; 7'), located on either side of the through opening (6), are symmetrical with respect to a straight line passing through the center of such a lobe (8; 8'; 8") and/or with respect to a plane passing through the centers of the lobes (8; 8'; 8").

5. Acoustic horn (3) according to any of the preceding claims, **characterized in that** the lateral walls (7; 7') have a curvature which is either defined, at least in part, by a parabolic function or is defined by an asymptotic function and tends towards an asymptote, either constituted by the front face (5) or parallel to the rear face (4).

6. Acoustic horn (3) according to any of the preceding claims, **characterized in that** it consists of a hardenable material, in particular concrete, plaster or the like.

7. Acoustic enclosure (1) which comprises an acoustic horn (3) according to any of the preceding claims, and a plurality of loudspeakers (2; 2'; 2") which each comprise at least a part which extends inside the through opening (6) as well as inside one of the lobes (8; 8'; 8") of the through opening (6) of the acoustic horn (3).

8. Acoustic enclosure (1) which comprises a box (10) which has a bottom (11) as well as lateral walls (12) which extend from this bottom (11), and a plurality of loudspeakers (2; 2'; 2") which each comprise at least a part which extends inside the box (20), **characterized in that** said enclosure comprises an acoustic horn (3) which is formed according to any of claims 1 to 6 and which is positioned so that at least a part of each of the loudspeakers (2; 2'; 2) extends between the acoustic horn (3) and the bottom (11) of the box (10).

9. Method for producing an acoustic horn (3) for an acoustic enclosure (1) having a plurality of loudspeakers (2; 2'; 2"), **characterized in that** the acoustic horn (3) is formed according to any of claims 1 to 6 and **in that** this method consists in:
- producing a mold (20) which comprises a bottom (21), lateral walls (22) which extend from this bottom (21), an elastic or stretchable film (23) which is stretched over the free end of the lateral walls (22) and fixed to these lateral walls (22), and also a plurality of elements (24; 24'; 24") which are placed over the film (23) and over the bottom (21) of the mold (20) and are fixed to the bottom (21) of this mold (20);
- introducing a hardenable material inside the mold (20) into an internal volume delimited by the bottom (21), the lateral walls (22) and the film (23);
- allowing this hardenable material to harden in order to obtain the acoustic horn (3).

10. Method for producing an acoustic horn (3) for an acoustic enclosure (1) having a plurality of loudspeakers (2; 2'; 2"), **characterized in that** the acoustic horn (3) is formed according to any of claims 1 to 6 and this acoustic horn (3) is printed or this acoustic horn (3) is machined in a block of material, in particular wood or a synthetic material.

11. Method for producing an acoustic horn (3) for an acoustic enclosure (1) having a plurality of loudspeakers (2; 2'; 2"), **characterized in that** the acoustic horn (3) is formed according to any of claims 1 to 6 and **in that** the production method consists in producing a casing which constitutes the negative of this acoustic horn (3), introducing a hardenable material inside this casing, and allowing the hardenable material to harden in order to obtain the acoustic horn (3) before removing this acoustic horn (3) from the casing.

12. Method for producing an acoustic horn (3) according to claim 11, **characterized in that**, when the casing is produced, such a casing is printed or a block of material is machined.

13. Method for producing an acoustic horn (3) according to claim 11, **characterized in that**, when the casing is produced, a reference acoustic horn is first produced by carrying out the production method according to either claim 9 or claim 10, an impression of the reference acoustic horn is then produced in a suitable material, and finally the casing is produced from this impression.

14. Method for producing an acoustic enclosure (1) having a plurality of loudspeakers (2; 2'; 2"), **characterized in that** the acoustic enclosure (1) is formed according to claim 8 and this production method consists in first producing an acoustic horn (3) in accordance with the production method according to any of claims 9 to 13, and then positioning this acoustic horn (3) so that at least a part of each of the loudspeakers (2; 2'; 2") extends between this acoustic horn (3) and the bottom (11) of the box (10).
